(19) **Europäisches Patentamt**

**European Patent Office**

**Office européen des brevets**

(11) Veröffentlichungsnummer: **0 382 231 B1**

(12) **EUROPÄISCHE PATENTSCHRIFT**

(45) Veröffentlichungstag der Patentschrift: **03.05.95**

(21) Anmeldenummer: **90102521.3**

(22) Anmeldetag: **08.02.90**

(51) Int. Cl.⁶: **B66C 15/04**, G05B 19/00

(54) Verfahren und Anordnung zur Begrenzung des Bewegungsbereichs eines Krans.

(30) Priorität: **09.02.89 DE 3903757**

(43) Veröffentlichungstag der Anmeldung:
**16.08.90 Patentblatt 90/33**

(45) Bekanntmachung des Hinweises auf die
Patenterteilung:
**03.05.95 Patentblatt 95/18**

(84) Benannte Vertragsstaaten:
**CH DE FR GB LI**

(56) Entgegenhaltungen:
**EP-A- 0 252 841**   **FR-A- 2 240 884**
**FR-A- 2 416 190**   **FR-A- 2 452 739**
**GB-A- 2 205 463**   **US-A- 4 205 308**

(73) Patentinhaber: **MAN GHH LOGISTICS GMBH**
**Hans-Riesser-Strasse 7**
**D-74076 Heilbronn (DE)**

(72) Erfinder: **Fischer, Christoph**
**Steuppergstrasse 33**
**D-7121 Cleebronn (DE)**
Erfinder: **Sauer, Heinz Ulrich**
**Im Talacher 43**
**CH-8306 Brüttisellen (DE)**

(74) Vertreter: **Liska, Horst, Dr.-Ing. et al**
**Patentanwälte**
**H. Weickmann,K. Fincke,F.A. Weickmann,**
**B. Huber,H. Liska,J. Prechtel,B. Böhm**
**Postfach 86 08 20**
**D-81635 München (DE)**

## Beschreibung

Die Erfindung betrifft ein Verfahren und eine Anordnung zur Begrenzung des Bewegungsbereichs eines von einer Antriebs- und Bremseinrichtung antreibbaren bzw. abbremsbaren Elements eines Krans, insbesondere des Dreh- und/oder Ausladungsbereichs eines Auslegers eines Drehkrans, speziell eines Turmdrehkrans, sowie eine Anordnung zur Begrenzung des Bewegungsbereichs des Krans.

Drehkräne, wie zum Beispiel Turmdrehkräne, werden üblicherweise manuell über Meisterschalter gesteuert, die sowohl eine Beschleunigung als auch die Verzögerung der Kranbewegung bestimmen, wie zum Beispiel bei der Steuerung der Drehgeschwindigkeit eines Kranauslegers, der Geschwindigkeit, mit der die Ausladung des Kranauslegers geändert wird, der Hubgeschwindigkeit des Kranhakens oder der Fahrgeschwindigkeit des gesamten Krans. Muß der Kran in einem durch Hindernisse begrenzten Gebiet arbeiten, so mindert die dann erforderliche erhöhte Wachsamkeit des Kranführers die Arbeitsleistung.

Aus der DD-A-220 581 ist es bekannt, durch Positionssensoren die momentane Hakenposition in einem dreidimensionalen Koordinatensystem zu erfassen und mittels einer Mikroprozessorsteuerung den Arbeitsbereich des Krans dreidimensional zu begrenzen. Die Steuerung vergleicht die an dem Kran kontinuierlich erfaßte Lastposition mit den im Speicher des Mikroprozessors gespeicherten Grenzen und sperrt die Antriebe des Krans soweit sie zu einer Überschreitung der Bewegungsgrenzen führen würden. Die Bewegungsgrenzen können im Lernbetrieb durch Anfahren der Begrenzung einprogrammiert werden.

Um die Arbeitsleistung des Krans zu steigern, wird eine möglichst hohe Bewegungsgeschwindigkeit angestrebt, die bei der Annäherung an die Grenze des Bewegungsbereichs bis zum Stillstand gemindert werden muß. Um wechselnder Belastung Rechnung zu tragen, haben herkömmliche Krane Sensoren, die bei Annäherung an eine Position, in der der Kran zum Stillstand kommen soll, eine Vorabschaltung bewirken und die Bewegungsgeschwindigkeit mindern, bevor weitere Sensoren bei der mit verringerter Geschwindigkeit fortgeführten Annäherung den Antrieb abschalten und die mechanischen Haltebremsen einfallen lassen. Die Kranbewegung wird damit mechanisch aus der, wenn auch verringerten Geschwindigkeit heraus zum Stillstand abgebremst.

Die Arbeitsleistung derartiger bei der Begrenzung des Bewegungsbereichs in zwei Stufen abgebremster Krane läßt vielfach zu wünschen übrig, da die Begrenzungsgenauigkeit, mit der der Kran an der Begrenzung des Bewegungsbereichs angehalten werden kann, aufgrund der wechselnden Belastung einen vergleichsweise großen vorabschaltweg benötigt, in welchem der Kran mit verringerter Geschwindigkeit arbeitet.

Aus EP-A-252 841 ist es bekannt, den Bewegungsbereich eines Kranauslegers dadurch zu begrenzen, daß in einem vorbestimmten Abstand zu einer Position, die die Begrenzung eines "verbotenen" Bewegungsbereichs bildet, begonnen wird die Bewegung des Kranauslegers automatisch abzubremsen, derart daß dieser vor dem Erreichen des "verbotenen" Bereichs zum Stillstand abgebremst wird. Hierzu wird mittels eines Positionssensors erfaßt, ob sich der Kran bis auf den vorbestimmten, gleichbleibend vorgegebenen Abstand an den verbotenen Bereich angenähert hat und es wird, wenn der vorbestimmte Abstand überschritten wurde, abhängig von der mittels eines Geschwindigkeitssensors erfaßten momentanen Auslegergeschwindigkeit die Bremsstärke, mit der der Ausleger verzögert wird, gewählt. Die Steuerung der Bremsverzögerung erfolgt in Stufen, die ihrerseits Geschwindigkeitsbereichen zugeordnet sind.

Es ist Aufgabe der Erfindung, ein Verfahren und eine Anordnung zur Brenzung des Bewegungsbereiches eines Krans, insbesondere eines Drehkrans, anzugeben, durch das bzw. die die Arbeitsleistung des Krans erhöht werben kann.

Ausgehend von einem Verfahren zur Begrenzung des Bewegungsbereichs eines Krans der aus EP-A-252 841 bekannten Art, bei welchem die momentane Position des von einer Antriebs- und Bremseinrichtung antreibbaren bzw. abbremsbaren Element des Krans erfaßt und die momentane Bewegungsgeschwindigkeit des Elements ermittelt wird und bei welchem die Antriebs- und Bremseinrichtung so gesteuert wird, daß das Element abhängig vom Abstand zu einer vorgegebenen Soll-Position automatisch zum Stillstand abgebremst wird, ist erfindungsgemäß vorgesehen, daß für die erfaßte momentane Position des Elements ein Maximalwert der Geschwindigkeit des Elements ermittelt wird, mit der sich das Element bewegen darf, wenn es ausgehend von der erfaßten momentanen Position mittels der Antriebs- und Bremseinrichtung bis zum Erreichen der Soll-Position zum Stillstand abbremsbar sein soll und daß die Antriebs- und Bremseinrichtung die Bremsung des Elements zum Stillstand beginnt, wenn in der erfaßten momentanen Position die ermittelte momentane Bewegungsgeschwindigkeit größer oder gleich dem für diese momentane Position ermittelten Maximalwert der Geschwindigkeit ist.

Ein solches Verfahren erlaubt die automatische Anpassung der für das Abbremsen des sich bewegenden Elements des Krans benötigten Bremswegs an die tatsächliche Geschwindigkeit, mit der sich das Element an die Soll-Position, in der es zum Stillstand kommen soll, annähert. Die konstruktionsbedingte maximale Bremsverzögerung der Antriebs- und Bremseinrichtung legt eine maximal zulässige Annäherungsgeschwindigkeit fest, die nicht überschritten werden darf, wenn die Bewegung nicht über die für den Stillstand gewünschte Soll-Position hinausführen soll. Der Vergleich der momentanen Geschwindigkeit mit dem auf diese Weise bestimmten Maximalwert der Geschwindigkeit, d.h. der maximal zulässigen Geschwindigkeit, liefert den Zeitpunkt, zu dem der Bremsbetrieb begonnen werden muß.

Die Erfindung erlaubt eine situationsgerechte Abbremsung der Bewegung, bei der die Betriebsgeschwindigkeit so lange wie möglich beibehalten werden kann, bevor der Abbremsbetrieb eingeleitet wird. Es werden abrupte Bremsmanöver vermieden, wodurch die Statik des Krans von Massenträgheitskräften entlastet wird.

Die maximal zulässige Geschwindigkeit ist umso größer, je weiter das abzubremsende Element des Krans von der Soll-Position, in der es zum Stillstand kommen soll, noch entfernt ist. Der Funktionszusammenhang zwischen der maximal zulässigen Geschwindigkeit und der Position des Elements, d.h. dem Wegabstand des Elements von der Soll-Position kann empirisch ermittelt und gespeichert werden oder aufgrund physikalischer Gesetze der Bewegungslehre errechnet werden.

In einer bevorzugten Ausgestaltung der Erfindung wird die maximal zulässige Geschwindigkeit ausschließlich auf der Grundlage der Bremsverzögerung des auch zum Antrieb benutzten Elektromotors im Generatorbetrieb oder bei Drehrichtungsumpolung oder der Bremsverzögerung einer Wirbelstrombremse zugrunde gelegt. Diese nachfolgend allgemein als elektromotorische Bremse bezeichnete Bremseinrichtung ermöglicht einen automatisierten elektrischen Bremsbetrieb, bei welchem die Funktion der normalerweise vorhandenen mechanischen Bremse auf die Funktion einer im wesentlichen nur im Stillstand wirksamen Haltebremse oder auf Ausnahmefälle beschränkt bleibt. Ausnahmefälle können beispielsweise bei einem Netzausfall oder bei extremen Windkräften auftreten, die den Ausleger zusätzlich zu drehen versuchen.

Die mechanische Bremse kann in ähnlicher Weise wie die elektromotorische Bremse gesteuert werden, in dem entsprechend der Bremsverzögerung der mechanischen Bremse wiederum eine maximal zulässige Geschwindigkeit ermittelt wird, die, wenn sie von der momentanen Bewegungsgeschwindigkeit des zu bremsenden Elements des Krans überschritten wird, zum Auslösen der mechanischen Bremse führt. Die Bremsverzögerung der mechanischen Bremse sollte größer sein als die der elektromotorischen Bremse, um die Notfunktion mit übernehmen zu können. Es versteht sich, daß sowohl die elektromotorische Bremse als auch die mechanische Bremse mit abgestufter Bremsverzögerung ausgestattet sein kann, um den Funktionszusammenhang zwischen der maximal zulässigen Geschwindigkeit und der momentanen Position des Elements situationsgerecht, insbesondere der Hakenlast entsprechend, festlegen zu können.

Die erfindungsgemäße Anordnung zur Begrenzung des Bewegungsbereichs des Elements des Krans umfaßt einen Datenspeicher zur Speicherung von Informationen über eine als Bewegungsbereichsgrenze vorgebbare Soll-Position und eine die Antriebs- und Bremseinrichtung für das Abbremsen des Elements abhängig von dessen momentaner Position und der Soll-Position im Bremsbetrieb automatisch steuernde Steuerung, die ihrerseits eine erste, die momentane Bewegungsgeschwindigkeit des Elements ermittelnde Einrichtung umfaßt. Bei der ersten Einrichtung kann es sich um einen Geschwindigkeitssensor des Krans handeln, der geschwindigkeitsproportionale Signale liefert, oder aber um eine Recheneinrichtung, die abhängig von Signalen des Positionssensors durch Differenzieren geschwindigkeitsproportionale Signale liefert. Die Steuerung weist erfindungsgemäß eine zweite Einrichtung auf, die abhängig von der mittels des Positionssensors erfaßten momentanen Position des Elements einen Maximalwert der Geschwindigkeit ermittelt, mit der sich das Element bewegen darf, wenn es mittels der Antriebs- und Bremseinrichtung bis zum Erreichen der Soll-Position zum Stillstand abbremsbar sein soll. Bei der zweiten Einrichtung kann es sich um einen Datenspeicher handeln, der in Tabellenform die Werte maixmal zulässiger Geschwindigkeiten in Abhängigkeit von Positionswerten, d.h. in Abhängigkeit von Werten des Abstands des Elements zur Soll-Position enthält. Die Maximalwerte, d.h. die Werte der maximal zulässigen Geschwindigkeit können empirisch ermittelt oder aber errechnet sein. Bei der zweiten Einrichtung kann es sich aber ebenfalls um eine Recheneinrichtung handeln, die die Geschwindigkeitswerte abhängig von der momentanen Position jeweils aktuell errechnet. Eine dritte Einrichtung der Steuerung vergleicht die momentane Bewegungsgeschwindigkeit mit dem Maximalwert und gibt den Bremsbetrieb frei, wenn die von der ersten Einrichtung ermittelte momentane Bewegungsgeschwindigkeit des Elements größer oder gleich dem von der zweiten Einrichtung für die erfaßte momentane Position des Elements ermittelten Maximalwert der Geschwindigkeit ist.

Auch bei der erfindungsgemäßen Anordnung ist in einer bevorzugten Ausgestaltung vorgesehen, daß im Normalbetrieb ausschließlich aufgrund der elektromotorischen Bremswirkung z.B. des zum Antrieb benutzten Elektromotors gebremst wird und eine eventuell zusätzlich vorgesehene mechanische Bremse nur in Ausnahmefällen oder als Haltebremse im Stillstand zum Einsatz kommt.

In einer zweckmäßigen Ausgestaltung der Anordnung ist vorgesehen, daß die Steuerung für einen in Form eines Polygonzugs begrenzten Bewegungsbereich die Soll-Position durch mathematische Interpolation von Polygonlinien zwischen Polygonecken des Polygonzugs errechnet und daß die den Polygonecken zugeordneten Soll-Positionen in einer Lernbetriebsart durch Anfahren der entsprechenden Positionen mittels des zu überwachenden Elements des Krans und Einschreiben der daraufhin von dem Positionssensor gelieferten Daten in den Datenspeicher vorgebbar sind. Diese Ausgestaltung erlaubt eine besonders einfache Programmierung der Bewegungsbereichsgrenzen.

Die erfindungsgemäße Anordnung eignet sich insbesondere zur Nachrüstung bei bereits vorhandenen Kranen. Üblicherweise ist die Antriebs- und Bremseinrichtung herkömmlicher Krane an eine Schaltschützsteuerung angeschlossen, die ihrerseits über manuell bedienbare Meisterschalter steuerbar ist. Während herkömmliche Anordnungen zur Bewegungsbegrenzung von Kranen zusätzliche Schaltungslogik mit Hilfsschützen erforderlich machten, genügt es, wie in einer zweckmäßigen Ausgestaltung der Erfindung vorgesehen ist, die vorstehend erläuterte Steuerung über eine auftrennbare Steckverbindung zwischen die Meisterschalter und die Schaltschützsteuerung zu schalten. Die Steuerung greift lediglich bei Annäherung an die Begrenzung korrigierend in die Schaltbefehle der Meisterschalter ein und verringert in der vorstehend erläuterten Weise die Annäherungsgeschwindigkeit. Durch Herausnehmen der Steuerung und Überbrücken der Steckverbindung kann die herkömmliche Funktion der Schaltschützsteuerung ohne Begrenzung des Bewegungsbereichs wiederhergestellt werden.

Im folgenden wird die Erfindung anhand einer Zeichnung näher erläutert. Hierbei zeigt:

Fig. 1 ein Blockschaltbild einer Anordnung zur Begrenzung des Dreh- und Ausladungsbereichs eines Drehkrans, insbesondere eines Turmdrehkrans;

Fig. 2 eine schematische Draufsicht auf den Turmdrehkran zur Erläuterung des bei der Anordnung nach Fig. 1 angewandten Begrenzungsverfahrens und

Fig. 3 ein Diagramm, welches die Geschwindigkeit der Kranbewegung in Abhängigkeit von der Kranposition zeigt.

Fig. 2 zeigt schematisch einen Turmdrehkran 1 mit einem längs Schienen 3 fahrbaren Fahrwerk 5 und einem um die bei 7 dargestellte vertikale Turmachse drehbaren Ausleger 9, dessen Ausladung mittels eines nicht näher dargestellten Wippantriebs oder, wie in Fig. 2 gezeigt, mittels einer längs des Auslegers 9 fahrbaren Laufkatze 11 änderbar ist.

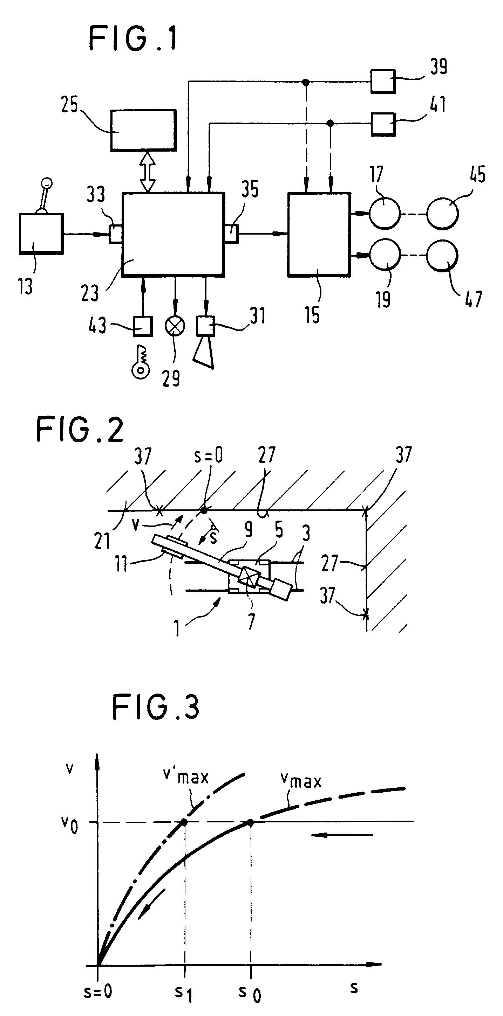

Der Drehkran 1 wird im Normalbetrieb über Meisterschalter 13 (Fig. 1) manuell bedient. Die Meisterschalter 13 steuern über eine üblicherweise in einem Schaltschrank des Krans untergebrachte Schaltschützsteuerung 15 die Antriebsmotore des Kranfahrwerks, des Ausleger-Drehwerks, des die Ausladung bestimmenden Katzfahrwerks bzw. Wippwerks und des Hubwerks. Fig. 1 zeigt bei 17 den Elektromotor des Drehwerks und bei 19 den Elektromotor des Katzfahrwerks bzw. des Wippwerks. Die Motore des Kranfahrwerks und des Hubwerks sind nicht näher dargestellt. Den Antrieben sind, soweit deren Bewegungsbereich durch die Krankonstruktion Grenzen gesetzt sind, Positionssensoren zugeordnet, die für eine selbsttätige Endabschaltung der Antriebe sorgen.

Um den Drehkran, bei welchem es sich insbesondere um einen Baukran handeln kann, auch in einem durch Hindernisse 21 (Fig. 2) begrenzten Gebiet einsetzen zu können, ist in die Verbindungsleitung zwischen die Meisterschalter 13 und die Schaltschützsteuerung 15 eine Steuerung 23 geschaltet, die den Bewegungsbereich des Krans zweidimensional in einer horizontalen Ebene, vorzugsweise jedoch dreidimensional räumlich begrenzt. Die Steuerung 23 korrigiert die von den Meisterschaltern 13 gelieferten Steuerbefehle, wenn die Kranbewegung mit in einem Datenspeicher 25 gespeicherten Informationen über Begrenzungen 27 (Fig. 2) des Hindernisses 21 kollidiert. Die Steuerung 23 bringt unabhängig von der Einstellung der Meisterschalter 13 zumindest die kollidierende Bewegung des Krans zum Stillstand, bevor es zu einer Kollision kommt. Zusätzlich löst die Steuerung 23 optische bzw. akustische Warneinrichtungen 29, 31 aus.

Um den Einbau der Steuerung 23 zu erleichtern, ist sie über Steckverbindungen 33, 35 in die Verbindungsleitung zwischen die Meisterschalter 13 und die Schaltschützsteuerung 15 geschaltet. Die Anordnung ist so getroffen, daß die Steckverbindungen 33, 35 zum Entnehmen der Steuerung 23 überbrückt, beispielsweise unmittelbar miteinander gekuppelt werden können, so daß der Kran ohne Begrenzung des Bewegungsbereichs herkömmlich weiterbetrieben werden kann.

Die in dem Datenspeicher 25 gespeicherten Informationen über die räumlichen Positionen der Begrenzungen 27 relativ zum Kran werden in einer Lernbetriebsart durch Anfahren von Eckpunkten 37 eines durch die Begrenzungen 27 gebildeten Polygonzugs einprogrammiert. Positionssensoren 39, 41, die die momentanen Positionen der in ihrer Bewegung zu begrenzenden Elemente erfassen, liefern die Positionsdaten für die Eckpunkte 37. Im dargestellten Ausführungsbeispiel erfassen die Positionssensoren 39, 41 die momentane Winkelposition des Auslegers 9 und dessen Ausladung. Die Steuerung 23 interpoliert nach üblichen trigonometrischen Verfahren Positionskoordinaten der Begrenzungen 27 zwischen den Eckpunkten 37. Um ungewollte Änderung der Programmierung zu verhindern, ist der Steuerung 23 ein Schlüsselschalter 43 zugeordnet.

Die Steuerung 23 steuert die Elektromotore 17, 19 des Drehwerks und des Katzfahrwerks bzw. des Wippwerks so, daß die Bewegung des Auslegers 9 bzw. der Last die Begrenzung 27 nicht erreicht. Abhängig von der Geschwindigkeit v, mit der sich die Last auf die Begrenzung 27 zubewegt, ermittelt die Steuerung 23 selbsttätig die Position, in der die Elektromotore des Antriebs abgeschaltet und Bremseinrichtungen des Antriebs betätigt werden müssen, um die Kranbewegung vor Erreichen der Begrenzung 27 zum Stillstand abzubremsen. Für das betriebsmäßige Abbremsen im wesentlichen bis zum Stillstand sind die Elektromotore 17, 19 auf Generatorbetrieb umschaltbar oder aber drehrichtungsumpolbar, so daß das von den Motoren erzeugte Gegendrehmoment zum Abbremsen ausgenutzt wird. Alternativ können für die elektromotorische Bremsung nicht näher dargestellte Wirbelstrombremsen den Elektromotoren zugeordnet sein. Den Elektromotoren 17, 19 sind zusätzliche mechanische Bremsen 45, 47 zugeordnet, die lediglich im Stillstand als mechanische Haltebremse oder in Ausnahmefällen, zum Beispiel bei Netzstromausfall oder übermäßiger auf den Ausleger wirkender Windlast zum Einsatz kommen. Das betriebsmäßige Abbremsen bei Annäherung an die Begrenzung 27 erfolgt jedoch im Normalbetrieb auf elektromotorischem Weg.

Der Bremsbeginn wird von der Steuerung 23 abhängig von der momentanen Position s des in seinem Bewegungsbereich zu begrenzenden Kranelements, d.h. dem Wegabstand dieses Elements von der Begrenzung 27 einerseits und der momentanen Bewegungsgeschwindigkeit v des Elements andererseits bestimmt. Die momentane Position s wird von den Positionssensoren 39, 41 erfaßt. Die Steuerung 23 errechnet aus der zeitlichen Änderung der momentanen Position die momentane Bewegungsgeschwindigkeit v, mit der sich das Element auf die Begrenzung 27 zubewegt. Gegebenenfalls können zusätzliche Geschwindigkeitssensoren vorgesehen sein, die unmittelbar geschwindigkeitsproportionale Signale liefern. Nachdem die konstruktionsbedingte Größe der elektromotorisch von den Motoren 17 bzw. 19 erreichbaren Bremsverzögerung bekannt ist, existiert für jede Position längs des Wegs s ein maximal zulässiger Grenzwert der Geschwindigkeit, der nicht überschritten werden darf, wenn das zu überwachende Kranelement unter Zugrundelegung der bekannten Bremsverzögerung spätestens an der Begrenzung 27 zum Stillstand kommen soll. Der Zusammenhang zwischen der maximal zulässigen Geschwindigkeit $v_{max}$ und dem Abstand s von der Begrenzung läßt sich empirisch ermitteln oder für einfache Fälle, wie zum Beispiel die lineare Bewegung des Katzfahrwerks gemäß der Gleichung

$$v_{max} = \sqrt{2as} \qquad (1)$$

errechnen. In der Gleichung bedeutet a die Bremsbeschleunigung des Elektromotors im elektromotorischen Bremsbetrieb. Die Steuerung vergleicht die momentane Bewegungsgeschwindigkeit v mit dem Grenzwert $v_{max}$ und leitet die elektromotorische Bremsung ein, wenn die Bewegungsgeschwindigkeit v gleich oder größer dem Grenzwert $v_{max}$ ist. In Fig. 3 nähert sich das zu überwachende Kranelement mit einer Geschwindigkeit $v_0$ der Begrenzung bei s = 0. In der Position $s_0$ wird der Elektromotor auf elektromotorische Bremsung umgeschaltet, womit die Geschwindigkeit v entsprechend der Charakteristik $v_{max}(s)$ zum Stillstand bei s = 0 abgebremst wird.

Die mechanischen Bremsen 45, 47 haben eine höhere Bremsverzögerung als die elektromotorische Bremse der Motore 17, 19. Zur Erhöhung der Sicherheit überwacht die Steuerung 23, ob die momentane Bewegungsgeschwindigkeit v größer oder gleich einem zweiten Grenzwert $v'_{max}$ ist, der entsprechend der größeren Bremsverzögerung der mechanischen Bremsen 45 bzw. 47 empirisch oder rechnerisch in Abhängigkeit von der Position s ermittelt wird. Erreicht die Bewegungsgeschwindigkeit v den zweiten Grenzwert $v_{max}'$ (Position $s_1$ in Fig. 3), so fallen zusätzlich die mechanischen Bremsen ein. Die Bremsverzögerung der mechanischen Bremsen ist jedoch so groß bemessen, daß sie das zu überwachende Element des Krans vor Erreichen der Begrenzung 27 sicher zum Stillstand abbremsen können.

Die vorstehende Steuerung des Abbremsbetriebs erhöht die Arbeitsleistung des Krans und verringert die Belastung der Krankonstruktion durch Massenträgheitskräfte.

Die Grenzwerte $v_{max}$ und $v_{max'}$ können in dem Datenspeicher 25 in Tabellenform abhängig von der Position s gespeichert sein oder aber aktuell errechnet werden. Bei der Steuerung 23 handelt es sich vorzugsweise um eine Mikroprozessorsteuerung.

**Patentansprüche**

1. Verfahren zur Begrenzung des Bewegungsbereichs eines von einer Antriebs- und Bremseinrichtung antreibbaren bzw. abbremsbaren Elements eines Krans, insbesondere des Dreh- und/oder Ausladungsbereichs eines Auslegers eines Drehkrans, speziell eines Turmdrehkrans,

bei welchem die momentane Position des Elements erfaßt und dessen momentane Bewegungsgeschwindigkeit ermittelt wird und

bei welchem die Antriebs- und Bremseinrichtung so gesteuert wird, daß das Element abhängig vom Abstand zu einer vorgegebenen Soll-Position automatisch zum Stillstand abgebremst wird,

dadurch gekennzeichnet,

daß für die erfaßte momentane Position des Elements ein Maximalwert der Geschwindigkeit des Elements ermittelt wird, mit der sich das Element bewegen darf, wenn es ausgehend von der erfaßten momentanen Position mittels der Antriebs- und Bremseinrichtung bis zum Erreichen der Soll-Position zum Stillstand abbremsbar sein soll, und daß die Antriebs- und Bremseinrichtung die Bremsung des Elementes zum Stillstand beginnt, wenn in der erfaßten momentanen Position die ermittelte momentane Bewegungsgeschwindigkeit größer oder gleich dem für diese momentane Position ermittelten Maximalwert der Geschwindigkeit ist.

2. Verfahren nach Anspruch 1, dadurch gekennzeichnet, daß die Antriebs- und Bremseinrichtung eine elektromotorische Bremseinrichtung, insbesondere eine Wirbelstrombremse oder/und einen zum Bremsen in den Generatorbetrieb umschaltbaren oder drehrichtungsumpolbaren Elektromotors umfaßt und daß der Maximalwert der Geschwindigkeit für eine Bremsung im wesentlichen ausschließlich durch die elektromotorische Bremseinrichtung ermittelt wird.

3. Verfahren nach Anspruch 1 oder 2, dadurch gekennzeichnet, daß die Antriebs- und Bremseinrichtung eine mechanische Bremse umfaßt, daß abhängig von der erfaßten momentanen Position des Elements ein weiterer Maximalwert der Geschwindigkeit ermittelt wird, mit der sich das Element bewegen darf, wenn es mittels der mechanischen Bremse allein bis zum Erreichen der Soll-Position zum Stillstand abbremsbar sein soll,

und daß die mechanische Bremse wirksam geschaltet wird, wenn die momentane Bewegungsgeschwindigkeit des Elements größer oder gleich dem für die momentane Position des Elements ermittelten weiteren Maximalwert ist.

4. Anordnung zur Begrenzung des Bewegungsbereichs eines von einer Antriebs- und Bremseinrichtung (17, 19, 45, 47) antreibbaren bzw. abbremsbaren Elements (9) eines Krans, insbesondere des Dreh- und/oder Ausladungsbereichs eines Auslegers eines Drehkrans, speziell eines Turmdrehkrans, mit wenigstens einem die momentane Position des Elements (9) erfassenden Positionssensor (39, 41), einem Datenspeicher (25) zur Speicherung von Informationen über eine als Bewegungsbereichsgrenze vorgebbare Soll-Position, und einer die Antriebs- und Bremseinrichtung (17, 19, 45, 47) für das Abbremsen des Elements (9) abhängig von dessen momentaner Position und der Soll-Position im Bremsbetrieb automatisch steuernde Steuerung (23), die eine erste, die momentane Bewegungsgeschwindigkeit des Elements (9) ermittelnde Einrichtung umfaßt,

dadurch gekennzeichnet,

daß die Steuerung aufweist:

eine zweite Einrichtung, die abhängig von der mittels des Positionssensors (39, 41) erfaßten momentanen Position des Elements (9) einen Maximalwert der Geschwindigkeit ermittelt, mit der sich das Element (9) bewegen darf, wenn es mittels der Antriebs- und Bremseinrichtung (17, 19, 45, 47) bis zum Erreichen der Soll-Position zum Stillstand abbremsbar sein soll, und

eine dritte Einrichtung, die die Antriebs- und Bremseinrichtung (17, 19, 45, 47) im Bremsbetrieb einschaltet, wenn die von der ersten Einrichtung ermittelte momentane Bewegungsgeschwindigkeit des Elements (9) größer oder gleich dem von der zweiten Einrichtung für die erfaßte momentane Position des Elements (9) ermittelten Maximalwert der Geschwindigkeit ist.

5. Anordnung nach Anspruch 4, dadurch gekennzeichnet, daß die Antriebs- und Bremseinrichtung (17, 19, 45, 47) eine elektromotorische Bremseinrichtung, insbesondere eine Wirbelstrombremse oder/und einen im Antriebsbetrieb das Element (9) antreibenden und zum Bremsen in den Generatorbetrieb umschaltbaren oder drehrichtungsumpolbaren Elektromotor (17, 19) aufweist und daß die zweite Einrichtung den Maximalwert der Geschwindigkeit für eine Bremsung des Elements (9) ausschließlich durch die elektromotorische Bremseinrichtung ermittelt.

6. Anordnung nach Anspruch 4 oder 5, dadurch gekennzeichnet, daß die Antriebs- und Bremseinrichtung (17, 19, 45, 47) eine mechanische Bremse (45, 47) umfaßt,

daß die Steuerung (23) eine vierte Einrichtung aufweist, die abhängig von der mittels des Positionssensors (39, 41) erfaßten momentanen Position des Elements (9) einen weiteren Maximalwert der Geschwindigkeit ermittelt, mit der sich das Element (9) bewegen darf, wenn es mittels der mechanischen Bremse (45, 47) allein bis zum Stillstand abbremsbar sein soll und

daß die Steuerung (23) eine fünfte Einrichtung aufweist, die die mechanische Bremse (45, 47) wirksam schaltet, wenn die momentane Bewegungsgeschwindigkeit des Elements (9) größer oder gleich dem für die momentane Position des Elements (9) von der vierten Einrichtung ermittelten weiteren Maximalwert ist.

7. Anordnung nach einem der Ansprüche 4 bis 6, dadurch gekennzeichnet, daß die zweite und/oder die vierte Einrichtung als Recheneinrichtung ausgebildet sind, die den Maximalwert der Geschwindigkeit als Quadratwurzel des Produkts aus der Wegdifferenz der momentanen Position des Elements (9) zur Soll-Position einerseits und der Bremsbeschleunigung der Antriebs- und Bremseinrichtung andererseits längs der Bewegungsbahn des Elements errechnet.

8. Anordnung nach einem der Ansprüche 4 bis 6, dadurch gekennzeichnet, daß die zweite und/oder vierte Einrichtung eine im Datenspeicher (25) gespeicherte Datentabelle mit Maximalwerten der Geschwindigkeit umfaßt.

9. Anordnung nach einem der Ansprüche 4 bis 8, dadurch gekennzeichnet, daß die Steuerung für einen in Form eines Polygonzugs begrenzten Bewegungsbereich die Soll-Position durch mathematische Interpolation von Polygonlinien (27) zwischen Polygonecken (37) des Polygonzugs errechnet und daß die den Polygonecken (37) zugeordneten Soll-Positionen in einer Lernbetriebsart durch Anfahren der entsprechenden Positionen mittels des Elements (9) und Einschreiben der daraufhin von dem Positionssensor gelieferten Daten in den Datenspeicher (25) vorgebbar sind.

10. Anordnung nach einem der Ansprüche 4 bis 9, dadurch gekennzeichnet, daß die Antriebs- und Bremseinrichtung (17, 19, 45, 47) an eine Schaltschützsteuerung (15) angeschlossen ist, die ihrerseits über manuell bedienbare Meisterschalter (13) steuerbar ist, welche über eine auftrennbare Steckverbindung (33, 35) für eine Betriebsart ohne Begrenzung des Bewegungsbereichs unmittelbar an die Schaltschützsteuerung (15) anschließbar sind und für eine Betriebsart mit Begrenzung des Bewegungsbereichs unter Zwischenschaltung der Steuerung (23) an die Schaltschützsteuerung (15) anschließbar sind.

## Claims

1. A method of limiting the range of movement of an element of a crane which can be driven and braked respectively by drive and braking means, in particular the angle of slew and/or radius of travel of a jib of a slewing crane, in particular a tower crane, in which the instantaneous position of the element is detected and its instantaneous speed of movement is determined, and in which the drive and braking means are controlled in such a way that, depending on the distance from a predetermined desired position, the element is automatically braked to a standstill, characterised in that for the detected instantaneous position of the element a maximum value of the speed of the element is determined, at which the element should move when, starting from the detected instantaneous position, it is capable of being braked to a standstill by means of the drive and braking means until it reaches the desired position, and in that the drive and braking means begins the braking of the element to a standstill when in the detected instantaneous position the determined instantaneous speed of movement is higher than or equal to the maximum value of the speed determined for this instantaneous position.

2. A method according to Claim 1, characterised in that the drive and braking means comprise an electromotive braking means, in particular an eddy-current brake and/or an electric motor which for braking can be switched over to generator operation or is reversible in polarity, and in that the maximum value of the speed for braking is determined substantially exclusively by the electromotive braking means.

3. A method according to Claim 1 or 2, characterised in that the drive and braking means comprise a mechanical brake, in that, depending on the detected instantaneous position of the element, a further maximum value of the speed is determined at which the element should move when it is intended capable of being braked to a standstill by means of the mechanical brake alone until it reaches the desired position, and in that the mechanical brake is effectively operated when the instantaneous speed of movement of the element is higher than or equal to the further maximum value determined for the instantaneous position.

4. An arrangement for limiting the range of movement of an element (9) of a crane which can be driven and braked respectively by drive and braking means (17, 19, 45, 47), in particular the angle of slew and/or radius of travel of a jib of a slewing crane, in particular a tower crane, with at least one position sensor (39, 41) detecting the instantaneous position of the element (9), with a data memory (25) for storing information with respect to a desired position which can be predetermined as a range of movement limit, and with a control system (23) which automatically controls the drive and braking means (17, 19, 45, 47) for braking the element (9), depending on its instantaneous position and the desired position during the braking operation, and which comprises a first device determining the instantaneous speed of movement of the element (9), characterised in that the control system has: a second device which, depending on the instantaneous position of the element (9) detected by means of the position sensor (39, 41), determines a maximum value of the speed at which the element (9) should move when it is capable of being braked to a standstill by means of the drive and braking means (17, 19, 45, 47) until it reaches the desired position, and a third device which switches on the drive and braking means (17, 19, 45, 47) in braking mode when the instantaneous speed of movement of the element (9) determined by the first device is higher than or equal to the maximum value of the speed determined by the second device for the detected instantaneous position of the element (9).

5. An arrangement according to Claim 4, characterised in that the drive and braking means (17, 19, 45, 47) has an electromotive braking device, in particular an eddy-current brake and/or an electric motor (17, 19) which in drive operation drives the element (9) and which for braking purposes can be switched over to generator operation or is reversible in polarity, and in that the second device determines the maximum value of the speed for braking the element (9) exclusively by the electromotive braking means.

6. An arrangement according to Claim 4 or 5, characterised in that the drive and braking means (17, 19, 45, 47) comprises a mechanical brake (45, 47), in that the control system (23) has a fourth device which, depending on the instantaneous position of the element (9) detected by means of the position sensor (39, 41), determines a further maximum value of the speed at which the element (9) should move when it is capable of being braked to a standstill by means of the mechanical brake (45, 47) alone, in that the control system (23) has a fifth device which renders the mechanical brake (45, 47) operative when the instantaneous speed of movement of the element (9) is higher than or equal to the further maximum value determined by the fourth device for the instantaneous position of the element (9).

7. An arrangement according to any one of Claims 4 to 6, characterised in that the second and/or fourth device is in the form of a computing device which calculates the maximum value of the speed of the square root of the product of the difference in travel of the instantaneous position of the element (9) relative to the desired position, on the one hand, and the braking acceleration of the drive and braking means, on the other hand, along the path of movement of the element.

8. An arrangement according to any one of Claims 4 to 6, characterised in that the second and/or fourth device comprises a data table stored in the data memory (25) with maximum values of speed.

9. An arrangement according to any one of Claims 4 to 8, characterised in that the control system for a range of movement delimited in the form of a polygonal course calculates the desired position by mathematical interpolation of polygonal lines (27) between polygonal corners (37) of the polygonal course, and in that the desired positions associated with the polygonal corners (37) can be predetermined in a learning mode of operation by the element (9) being moved to the corresponding positions and entering in the data memory (25) the data then supplied by the position sensor.

10. An arrangement according to any one of Claims 4 to 9, characterised in that the drive and braking means (17, 19, 45, 47) are connected to a contactor control means (15) which, in turn, can be controlled by manually operated master switches (13) which can be connected directly to the contactor control means (15) via a disconnectable plug-type connection (33, 35) for a mode of operation without limitation of the range of movement, and for a mode of operation with limitation of the range of movement they can be connected to the contactor control means (15) with interposition of the control system (23).

## Revendications

1. Procédé de limitation de l'amplitude de mouvement d'un élément appartenant à une grue, susceptible d'être entraîné ou freiné par un dispositif d'entraînement et de freinage, en particulier de l'amplitude de giration et/ou de la portée d'une flèche de grue pivotante et, plus spécialement, d'une grue à tour pivotante,

dans lequel la position instantanée de l'élément est détectée et sa vitesse de déplacement instantanée est déterminée et

dans lequel le dispositif d'entraînement et de freinage est commandé de telle sorte que l'élément, en fonction de l'écart vis-à-vis d'une position de consigne donnée, est freiné automatiquement jusqu'à immobilisation, caractérisé en ce que

pour la position instantanée de l'élément qui est détectée, est déterminée une valeur maximale de la vitesse de l'élément, à laquelle l'élément peut se déplacer quand, à partir de la position instantanée qui a été détectée et jusqu'à ce qu'il atteigne la position de consigne, il doit être susceptible d'être freiné jusqu'à immobilisation, au moyen du dispositif d'entraînement et de freinage, et en ce que le dispositif d'entraînement et de freinage commence à freiner l'élément jusqu'à immobilisation lorsque, dans la position instantanée qui a été détectée, la vitesse de déplacement instantanée déterminée est supérieure ou égale à la valeur maximale de vitesse déterminée pour cette position instantanée.

2. Procédé selon la revendication 1, caractérisé en ce que le dispositif d'entraînement et de freinage comprend un dispositif de freinage à moteur électrique, en particulier un frein à courants de Foucault ou/et un moteur électrique réversible en fonctionnement en génératrice, pour le freinage, ou dont on peut inverser le sens de rotation par inversion de polarité, et en ce que la valeur maximum de la vitesse, pour un freinage, est déterminée sensiblement exclusivement au moyen du dispositif de freinage à moteur électrique.

3. Procédé selon la revendication 1 ou 2, caractérisé en ce que le dispositif d'entraînement et de freinage comprend un frein mécanique, en ce que, en fonction de la position instantanée de l'élément qui a été détectée, est déterminée une autre valeur maximum de vitesse, à laquelle l'élément peut se déplacer lorsque, au moyen du frein mécanique uniquement, il doit pouvoir être susceptible d'être freiné jusqu'à immobilisation, jusqu'à ce qu'il atteigne la position de consigne, et en ce que le frein mécanique est mis en action lorsque la vitesse de déplacement instantanée de l'élément est supérieure ou égale à l'autre valeur maximale déterminée pour la position instantanée de l'élément.

4. Equipement de limitation de l'amplitude de mouvement d'un élément (9) appartenant à une grue, susceptible d'être entraîné ou freiné par un dispositif d'entraînement et de freinage (17, 19, 45, 47), en particulier de l'amplitude de giration et/ou de la portée d'une flèche de grue pivotante et, plus spécialement, d'une grue à tour pivotante, comprenant au moins un capteur de position (39, 41) détectant la position de l'élément (9), une mémoire (25) destinée au stockage d'informations sur une position de consigne susceptible d'être prédéterminée, en tant que limite de l'amplitude de mouvement, et une commande (23) commandant automatiquement en fonctionnement de freinage le dispositif d'entraînement et de freinage (17, 19, 45, 47), pour le freinage de l'élément (9), en fonction de sa position instantanée et de la position de consigne, commande qui comprend un premier dispositif déterminant la vitesse de déplacement instantanée de l'élément (9),

caractérisé en ce que

la commande comprend :

un deuxième dispositif qui, en fonction de la position instantanée de l'élément (9), détectée par le capteur de position (39, 41), détermine une valeur maximum de vitesse, à laquelle l'élément (9) peut se déplacer lorsqu'il doit être susceptible d'être freiné jusqu'à immobilisation par le dispositif d'entraînement et de freinage (17, 19, 45, 47), jusqu'à ce qu'il atteigne la position de consigne, et

un troisième dispositif qui fait passer le dispositif d'entraînement et de freinage (17, 19, 45, 47) en fonctionnement de freinage, lorsque la vitesse de déplacement instantanée de l'élément (9), déterminée par le premier dispositif, est supérieure ou égale à la valeur maximale de vitesse déterminée par le deuxième dispositif pour la position instantanée de l'élément (9) qui a été détectée.

5. Equipement selon la revendication 4, caractérisé en ce que le dispositif d'entraînement et de freinage (17, 19, 45, 47) comprend un dispositif de freinage à moteur électrique, en particulier un frein à courants de Foucault ou/et un moteur électrique (17, 19) entraînant, en fonctionnement d'entraînement, l'élément (9), dont on peut inverser le sens de rotation par inversion de polarité ou réversible en fonctionnement en génératrice, pour le freinage, et en ce que le deuxième dispositif détermine la valeur maximum de la vitesse, pour un freinage de l'élément (9), exclusivement au moyen du dispositif de freinage à moteur électrique.

6. Equipement selon la revendication 4 ou 5, caractérisé en ce que le dispositif d'entraînement et de freinage (17, 19, 45, 47) comprend un frein mécanique (45, 47), en ce que la commande (23) présente un quatrième dispositif qui, en fonction de la position instantanée de l'élément (9) qui a été détectée au moyen du capteur de position (39, 41), détermine une autre valeur maximum de vitesse, à laquelle l'élément (9) peut se déplacer lorsque, au moyen du frein mécanique (45, 47) uniquement, il doit être susceptible d'être freiné jusqu'à immobilisation, et

en ce que la commande (23) comprend un cinquième dispositif, qui met en action de façon effective le frein mécanique (45, 47) lorsque la vitesse de déplacement instantanée de l'élément (9) est supérieure ou égale à l'autre valeur maximale de vitesse déterminée par le quatrième dispositif pour la position instantanée de l'élément (9).

7. Equipement selon l'une des revendications 4 à 6, caractérisé en ce que le deuxième et/ou le quatrième dispositif sont conformés en dispositif de calcul, qui calcule la valeur maximum de vitesse sous forme de racine carrée du produit de la différence de distance entre la position instantanée de l'élément (9) et la position de consigne d'une part, et l'accélération au freinage du dispositif d'entraînement et de freinage d'autre part, le long de la trajectoire de déplacement de l'élément.

8. Equipement selon l'une des revendications 4 à 6, caractérisé en ce que le deuxième et/ou le quatrième dispositif comprennent un tableau de données, stocké dans la mémoire (25), avec des valeurs maximum de vitesse.

9. Equipement selon l'une des revendications 4 à 8, caractérisé en ce que la commande, pour une zone de déplacement limitée selon une forme de tracé polygonal, calcule la position de consigne par interpolation mathématique de lignes de polygone (27) entre des sommets de polygone (37) du tracé polygonal, et en ce que les positions de consigne associées aux sommets de polygone (37) sont susceptibles d'être prédéterminées, selon un type de fonctionnement d'apprentissage, par passage sur les positions correspondantes, au moyen de l'élément (9), et par enregistrement, dans la mémoire (25), des données délivrées alors par le capteur de position.

10. Dispositif selon l'une des revendications 4 à 9, caractérisé en ce que le dispositif d'entraînement et de freinage (17, 19, 45, 47) est raccordé à une commande à contacteur de couplage (15) qui, pour sa part, est susceptible d'être commandée par des combinateurs de manoeuvre (13) manuels, qui sont susceptibles d'être raccordés, par l'intermédiaire d'une liaison enfichable (33, 35) séparable, directement à la commande à contacteur de couplage (15), pour un type de fonctionnement sans limitation de l'amplitude de mouvement et qui, pour un type de fonctionnement avec limitation de l'amplitude de mouvement, sont susceptibles d'être raccordés à la commande à contacteur de couplage (15) par l'intermédiaire de la commande (23).

# FIG.1

# FIG.2

# FIG.3